# EUROPEAN PATENT APPLICATION

(11) **EP 4 834 654 A1**
(43) Date of publication of application: **04.11.2026**
(21) Application number: 24912288.8
(22) Date of filing: 06.12.2024
(51) Int. Cl.: B60L 58/27, B60L 1/00, B60L 50/60, B60L 53/14, H01M 10/613, H01M 10/615, H01M 10/625, H01M 10/633, H01M 10/6556, H01M 10/6568, H02J 7/00, H02J 7/04

(54) **ELECTRIC WORK VEHICLE**

(30) Priority: 27.12.2023 JP 2023221640
(71) Applicant: Kubota Corporation, Osaka-shi, Osaka 530-0011 (JP)
(72) Inventor: TAKASE, Shunya, Sakai-shi, Osaka 590-0908 (JP); MATSUMOTO, Ryunosuke, Sakai-shi, Osaka 590-0908 (JP); MISHIMA, Tomohiro, Sakai-shi, Osaka 590-0908 (JP); SHIOZAKI, Masato, Sakai-shi, Osaka 590-0908 (JP)
(74) Representative: Schlegel, Sebastian
(86) International application number: PCT/JP2024/043195
(87) International publication number: WO 2025/142398

(57) **Abstract**

A battery 4, an electric motor M1 configured to transmit motive power to a travel device 10, 11 using power from the battery 4, temperature regulator H configured to regulate the temperature of the battery 4 using power, and temperature detector 4B configured to detect the temperature of the battery 4 are included. If the temperature detected by the temperature detector 4B is lower than a first set temperature, the temperature regulator H operates in such a manner that the temperature of the battery 4 increases.

## Description

### Technical Field

The present invention relates to an electric work vehicle including a battery and an electric motor that transmits motive power to a travel device using power from the battery.

### Background Art

Some of conventional electric tractors, which are an example of an electric work vehicle, include a cooling device that cools a battery, as disclosed in Patent Document 1, for example.

### Prior Art Document

### Patent Document

Patent Document 1 : JP 2023-95636A

### Disclosure of the Invention

### Problem to be Solved by the Invention

For the above-described electric work vehicle, it is important to manage the temperature of the battery in order for the battery to be appropriately charged and discharged. The electric tractor disclosed in Patent Document 1 includes the cooling device that cools the battery, and can take measures against elevated temperatures of the battery. However, when the electric tractor is operated while the temperature of the battery is low in a cold region or the like, the battery may not be able to be appropriately charged and discharged. For this reason, it is necessary to provide a configuration for not only cooling the battery, but also increasing the temperature of the battery in a case where the battery temperature is low. In particular, in a low-temperature environment where the battery temperature is below an allowable temperature range of the battery, the battery becomes inoperative, thus making it impossible to perform a charge operation for the battery, let alone drive a travel electric motor by the battery.

It is an object of the present invention to provide an electric work vehicle capable of regulating the temperature of a battery even in a low-temperature environment.

### Means for Solving Problem

A characteristic feature of an electric work vehicle according to the present invention lies in including: a battery; an electric motor configured to transmit motive power to a travel device using power from the battery; a temperature regulator configured to regulate a temperature of the battery, using power; and a temperature detector configured to detect a temperature of the battery, in response to the temperature detected by the temperature detector being lower than a first set temperature, the temperature regulator operating in such a manner that the temperature of the battery increases.

According to the present invention, the temperature of the battery is increased by operating the temperature regulator if the temperature of the battery detected by the temperature detector is lower than the first set temperature. For example, a low temperature corresponding to the lower limit value of an allowable temperature range of the battery is set as the first set temperature. Although there is the possibility that the battery cannot operate at a temperature lower than the first set temperature, using the temperature regulator enables regulation of the temperature of the battery to bring the battery into an operative state.

Accordingly, it is possible to provide an electric work vehicle capable of regulating the temperature of the battery even in a low-temperature environment.

In the present invention, it is preferable that the temperature regulator operates using power supplied from an external power source.

This configuration makes it possible to increase the temperature of the battery using the power supplied from the external power source even in a situation where the battery cannot operate in a low-temperature environment.

In the present invention, it is preferable that, in response to the temperature of the battery detected by the temperature detector being higher than the first set temperature and lower than a second set temperature that is higher than the first set temperature, the temperature regulator operates using power supplied from the battery in such a manner that the temperature of the battery increases.

With this configuration, the battery becomes operative if the temperature of the battery is higher than the first set temperature. Accordingly, it is possible to operate the temperature regulator using power from the battery. As a result, it is possible to avoid the case where the temperature increasing operation of the temperature regulator that uses the external power source is performed for an unnecessarily long time, and unnecessary power consumption can be suppressed by using the power stored in the battery.

In the present invention, it is preferable that in response to the temperature of the battery increasing to the second set temperature or more, the temperature regulator stops a temperature increasing operation with respect to the battery.

This configuration makes it possible to suppress unnecessary consumption of not only the power from the external power source, but also power from the battery.

In the present invention, it is preferable that the temperature regulator includes a circulation flow path through which a refrigerant circulates through an interior of the battery, and a heater configured to heat the refrigerant, and the heater performs a heating operation using received power.

With this configuration, the temperature of the battery can be increased by the heating medium that is heated by the heater and circulates through the circulation flow path. This configuration makes it possible to heat the battery with a higher thermal efficiency than a case where the battery is directly heated using heat from the heater.

In the present invention, it is preferable that the electric work vehicle further includes a power conversion device configured to convert power supplied from an external power source into on-board power, and the temperature regulator switches a state of power supply in such a manner as to, in response to the temperature of the battery being lower than the first set temperature, convert the power supplied from the external power source into power suppliable to the heater as the on-board power and supply the converted power to the heater, and to, in response to the temperature of the battery being higher than the first set temperature, convert the power supplied from the external power source into power suppliable to the battery as the on-board power and supply the converted power to the battery.

With this configuration, the state of supply of the power received from the external power source can be switched between a state of supplying the power to the heater, and a state of supplying the power to the battery, and the operation of the temperature regulator at a low temperature and the charging of the battery in a normal operation can be performed satisfactorily.

In the present invention, it is preferable that the battery is not charged while the temperature of the battery is lower than the first set temperature.

With this configuration, the battery is not charged in a low-temperature state lower than the first set temperature, and it is therefore possible to easily avoid problems such as early degradation of the battery.

In the present invention, it is preferable that the battery is not discharged while the temperature of the battery is lower than the first set temperature.

With this configuration, the battery is not discharged in a low-temperature state lower than the first set temperature, and it is therefore possible to easily avoid problems such as early degradation of the battery.

In the present invention, it is preferable that the battery includes a plurality of unit cells, the temperature detector is configured to detect a temperature for each of the plurality of unit cells, and the temperature regulator operates in response to a lowest temperature among the temperatures of the plurality of unit cells being lower than the first set temperature.

A battery including a plurality of unit cells exhibits variations in properties from one unit cell to another, and also exhibits variations in temperature changes. Therefore, with this configuration, whether the temperature regulator is to operate is determined based on the lowest temperature among the temperatures detected for the plurality of unit cells. For example, if the average value of a plurality of temperatures is used, some of the unit cells that have a temperature lower than the average value may be adversely affected and thus become inoperative. However, with this configuration, it is possible to satisfactorily perform temperature regulation without allowing such a problem to occur.

In the present invention, it is preferable that motive power is transmittable to a work apparatus using power from the battery.

With this configuration, motive power is transmitted to a work apparatus using an electric motor, hydraulic equipment, or the like that operates using power from the battery, and various operations can be performed while the vehicle body is traveling.

In the present invention, it is preferable that the electric work vehicle further includes a second battery different from the battery and configured to supply power to an electric component, and the second battery is configured to supply power to the electric component at a temperature lower than the first set temperature.

With this configuration, power is also supplied from the second battery to the electric component for operating the temperature regulator even if the temperature of the battery is the first set temperature or less. Accordingly, it is possible to satisfactorily operate the temperature regulator.

In the present invention, it is preferable that the battery is a lithium ion battery, and the second battery is a lead-acid battery.

With this configuration, a lithium ion battery has a narrow operable temperature range, and is highly likely to become inoperative at a temperature less than or equal to the first set temperature. In contrast, a lead-acid battery has an operable temperature range that is wider than that of the lithium ion battery, and power can be supplied even at a temperature less than or equal to the first set temperature. Therefore, the second battery being a lead-acid battery makes it possible to supply power to the electric component for operating the temperature regulator even at a temperature less than or equal to the first set temperature.

### Brief Description of the Drawings

- FIG. 1: is an overall side view of an electric tractor.
- FIG. 2: is an overall plan view of the electric tractor.
- FIG. 3: is a block diagram showing a power system and a motive power system of the electric tractor.
- FIG. 4: is a front view of a relevant portion showing a battery and devices disposed on the periphery of the battery.
- FIG. 5: is a side view of a relevant portion showing the battery and a temperature regulation unit or the like.
- FIG. 6: is a flowchart of a control operation.

### Best Mode for Carrying out the Invention

A case where an embodiment of an electric work vehicle according to the present invention is applied to an electric tractor as an example of the electric work vehicle will be described with reference to the drawings. In the following description, unless particularly specified otherwise, the arrow F shown in the drawings indicates the "forward direction", the arrow B indicates the "rearward direction", the arrow L indicates the "leftward direction", and the arrow R indicates the "rightward direction". In addition, the arrow U shown in the drawings indicates the "upward direction", and the arrow D indicates the "downward direction".

### Overall Configuration of Electric Tractor

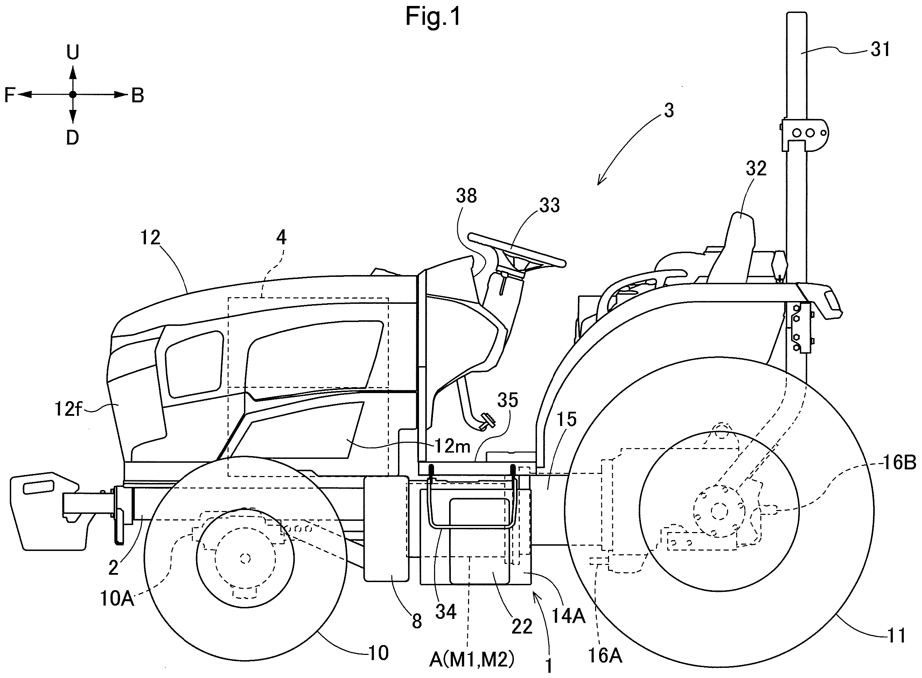

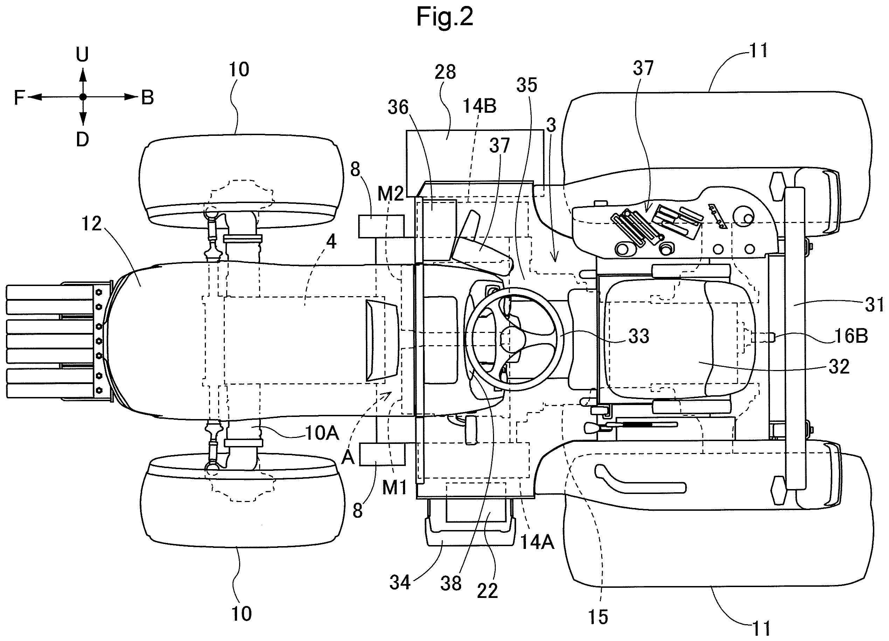

As shown in FIGS. 1 and 2, left and right front wheels 10 (corresponding to "travel devices" according to the present invention) are provided at a front portion of a tractor body 1, and left and right rear wheels 11 (corresponding to "travel devices" according to the present invention) serving as rear travel devices are provided at a rear portion of the tractor body 1. The tractor body 1 supports the front wheels 10 and the rear wheels 11.

The tractor body 1 includes a front frame 2, an accommodation frame A, and a transmission case 15. The front frame 2 is coupled to a front portion of the accommodation frame A, and the transmission case 15 is coupled to a rear portion of the accommodation frame A, thus forming a frame structure of the tractor body 1. An electric motor M1 and an electric motor M2 as motive power sources are accommodated in the accommodation frame A.

A front axle case 10A is attached to the front frame 2, and the left and right front wheels 10 are supported by the front axle case 10A. The front frame 2 supports the front axle case 10A. The transmission case 15 includes an axle case that transmits motive power to the left and right rear wheels 11, and the transmission case 15 supports the left and right rear wheels 11.

A driving section 3 on which an operator rides is provided above the accommodation frame A and the transmission case 15. A ROPS frame 31 attached to the transmission case 15 and extending upward is provided at a rear portion of the driving section 3. A first battery 4 (corresponding to a "battery" according to the present invention) for driving that supplies power to the electric motors M1 and M2 is attached to the front frame 2, and a hood 12 that covers the first battery 4 is provided.

The first battery 4 is placed and supported on the front frame 2. The front frame 2 is used both for supporting the first battery 4 and for supporting the front axle case 10A of the front wheels 10. The first battery 4 stores power for traveling, working, and hydraulic driving.

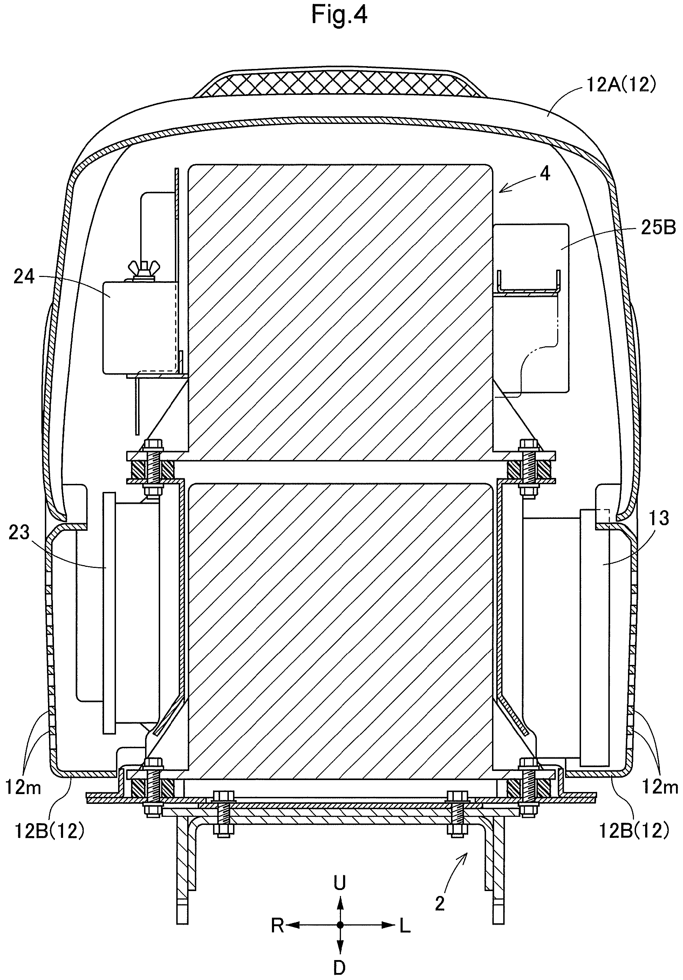

As shown in FIG. 4, the hood 12 includes a swing section 12A that swings in such a manner as to be opened and closed, and a fixed portion 12B fixed below the swing section 12A. The hood 12 is configured to be opened and closed by the swing section 12A swinging about a transverse axis extending in the left-right direction of the tractor body. The first battery 4 is covered by the hood 12 while the swing section 12A is closed.

As shown in FIG. 2, the electric tractor includes an electric motor M1 for traveling and an electric motor M2 for working and hydraulic driving. The electric motor M1 receives a supply of power from the first battery 4, and drives the front wheels 10 and the rear wheels 11. The electric motor M2 receives a supply of power from the first battery 4, and drives a work apparatus as will be described below.

The electric tractor includes two inverters 14A and 14B respectively corresponding to the two electric motors M1 and M2. The electric motors M1 and M2 are disposed on the rear side of the tractor body relative to the first battery 4. The inverters 14A and 14B are provided laterally outward of the electric motors M1 and M2.

The first battery 4 supplies power to the two inverters 14A and 14B. Each of the inverters 14A and 14B receives direct current from the first battery 4, and converts the direct current into three-phase alternating current. The direct-current power from the first battery 4 is converted into alternating-current power in the left inverter 14A, and the alternating-current power is supplied to the electric motor M1. Accordingly, the electric motor M1 operates. The direct-current power from the first battery 4 is converted into alternating-current power in the right inverter 14B, and the alternating-current power is supplied to the electric motor M2, whereby the electric motor M2 operates.

Left and right loader attachment sections 8 are respectively coupled to left and right side portions of the accommodation frame A. A work apparatus (not shown) such as a front loader is detachably attached to each of the left and right loader attachment sections 8.

### Configuration of Driving Section

As shown in FIGS. 1 and 2, the driving section 3 is provided rearward of the first battery 4 and the hood 12. The driving section 3 includes the ROPS frame 31, a driver's seat 32, a steering handle 33 for steering the front wheels 10, a step 34, a floor 35, a charging socket 36, a work travel operation member 37, a display unit 38, and so forth.

The driving section 3 is supported by the accommodation frame A and the transmission case 15. The electric motors M1 and M2 are disposed below the floor 35 of the driving section 3 and inside the accommodation frame A in such a manner as to be arranged side by side in the left-right direction.

Although not described in detail, the work travel operation member 37 includes an acceleration operating member for regulating the traveling speed, and an operation member for regulating the rotation speed of a mid PTO shaft 16A and a rear PTO shaft 16B, which will be described below. This enables the operator to perform various driving operations in the driving section 3. The display unit 38 displays, for example, the traveling state and the work state of the vehicle body, information regarding the first battery 4 (charge amount and temperature), and so forth.

The charging socket 36 is provided rightward of the steering handle 33 and directly above the floor 35. The first battery 4 is charged in response to the operator inserting an adapter of a charger into the charging socket 36. The charging socket 36 accepts received power for charging the first battery 4. The charging socket 36 supports normal charging for accepting alternating-current power (AC power supply) from an external power source, and fast charging for accepting high-voltage direct-current power for fast charging. The standard of the fast charging may be, for example, CHAdeMO, CCS2, GB/T, ChaoJi, NACS, or the like.

The accommodation frame A, the electric motors M1 and M2, the inverters 14A and 14B, and the transmission case 15 are disposed below the floor 35. The first battery 4 is disposed above the floor 35. In addition, the first battery 4 is provided on the front side of the driving section 3 in such a manner that a rear end portion of the first battery 4 is located on the front side of front end portions of the electric motors M1 and M2.

### Configuration of Motive Power Transmission Device

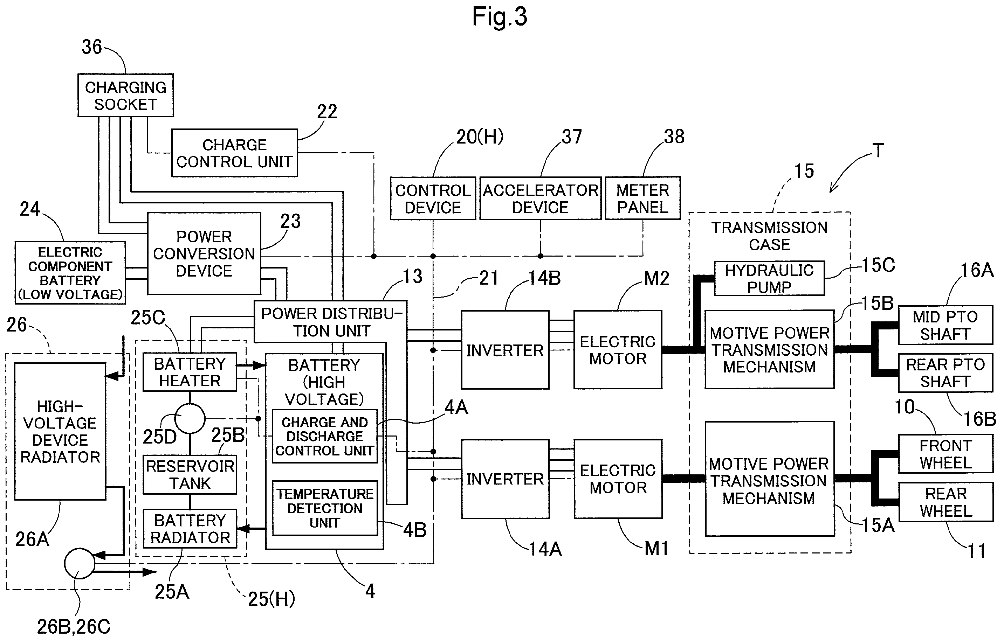

As shown in FIG. 3, the motive power transmission device T includes a traveling motive power transmission mechanism 15A, a working motive power transmission mechanism 15B, and a hydraulic pump 15C. The transmission case 15 accommodates the traveling motive power transmission mechanism 15A, the working motive power transmission mechanism 15B, and the hydraulic pump 15C. That is, the motive power transmission device T includes the transmission case 15, the traveling motive power transmission mechanism 15A, the working motive power transmission mechanism 15B, and the hydraulic pump 15C.

A mid PTO shaft 16A and a rear PTO shaft 16B are provided. The working motive power transmission mechanism 15B receives rotational motive power from the electric motor M2, and distributes the rotational motive power to the mid PTO shaft 16A and the rear PTO shaft 16B.

The working motive power transmission mechanism 15B transmits working motive power from the electric motor M2 to the mid PTO shaft 16A and the rear PTO shaft 16B. Then, the mid PTO shaft 16A and the rear PTO shaft 16B supply the working motive power to the work apparatus.

The hydraulic pump 15C receives rotational motive power from the electric motor M2 and is driven to rotate. For example, in a case where a front loader is mounted as the work apparatus, hydraulic fluid is supplied by the hydraulic pump 15C, and the work apparatus (front loader) is driven by the electric motor M2.

The work apparatus connected to the mid PTO shaft 16A may be, for example, a mowing apparatus, a rotary rake, a leaf cutting apparatus, a sprayer apparatus, or the like. The mid PTO shaft 16A may be used as a front PTO shaft for a work apparatus mounted to a front portion of the tractor body 1. The work apparatus connected to the rear PTO shaft 16B may be a rotary cultivator apparatus, an intertillage management apparatus, a ridging apparatus, or the like.

### Driving System of Electric Tractor

As shown in FIG. 3, the electric tractor includes a control device 20 configured to control the driving of the electric motors M1 and M2 in response to an operation performed on the work travel operation member 37. The control device 20 is a core element of a control system of the electric tractor, includes a microcomputer, and is capable of executing various types of operation processing. The control device 20 includes, in the form of a control program, a temperature regulation control unit configured to control the operation of a battery temperature regulation device, which will be described below.

The control device 20 is connected to a charge and discharge control unit 4A of the first battery 4, the inverters 14A and 14B, the electric motors M1 and M2, a charge control unit 22, a power conversion device 23, the work travel operation member 37, the display unit 38, and so forth in such a manner as to communicate data therewith via a signal harness 21 using a controller area network (CAN), for example. The power conversion device 23 includes an on-board charger (OBC) and a DC/DC converter, and converts the power supplied from the external power source to on-board power.

The control device 20 outputs a command signal to each of the inverters 14A and 14B in response to a command from the work travel operation member 37. In response to the command signal from the control device 20, the inverter 14A adjusts the three-phase alternating power (voltage value, frequency, current value, etc.) supplied to the electric motor M1 from the first battery 4, thus controlling the output of the electric motor M1. In response to the command signal from the control device 20, the inverter 14B adjusts the three-phase alternating power supplied to the electric motor M2 from the first battery 4, thus controlling the output of the electric motor M2.

The control device 20 controls the operation of the display unit 38. Operational states of the electric motors M1 and M2, information regarding the first battery 4, and so forth are displayed on the display unit 38.

The first battery 4 is a lithium ion battery. Although not shown, the first battery 4 is formed as a stack of a large number of small, low-voltage unit cells. The output voltage of the first battery 4 is 400 volts, for example. The plurality of unit cells are stored in an accommodation case in a sealed state.

The first battery 4 is electrically conductively connected to a power distribution unit 13. The power distribution unit 13 is also electrically conductively connected to the charging socket 36, the inverters 14A and 14B, and the power conversion device 23. Accordingly, the power distribution unit 13 functions as a hub that distributes power from the first battery 4 to the inverters 14A and 14B and the power conversion device 23. The power distribution unit 13 also has a function of transmitting power from the charging socket 36 to the first battery 4.

The first battery 4 includes the charge and discharge control unit 4A. The charge and discharge control unit 4A is configured to control the discharge current, the charge current, and the like of the first battery 4 based on the output voltage, the received voltage, and the exothermic temperature or the like of the first battery 4.

The first battery 4 includes a temperature detection unit 4B as temperature detector that detects the temperature of the first battery 4. Although not described in detail, the temperature detection unit 4B is configured to detect a temperature for each of the plurality of unit cells.

The power conversion device 23 is electrically conductively connected to the charging socket 36 and the power distribution unit 13. The charge control unit 22 regulates the power supplied from the charging socket 36. The charge control unit 22 may be, for example, a power module including a microcomputer or a programmable logic controller (PLC) that executes a program based on a control signal from the control device 20, or may be a relay circuit that operates based on an electric signal from the control device 20. The charge control unit 22 controls the charge voltage and the charge current applied to the first battery 4 when charging (including quick charging) the first battery 4. The charge control unit 22 regulates the power received from the charging socket 36, and supplies the regulated power to the first battery 4 as charging power.

The electric tractor includes, in addition to the first battery 4, a second battery 24 that supplies power to the control device 20 and other electric components. The second battery 24 is a lead-acid battery. The second battery 24 has an output voltage that is lower than the output voltage of the first battery 4, and supplies power of a low voltage (e.g., 12 volts) for driving the electric components.

The second battery 24 is charged by the power supplied from the first battery 4 via the DC/DC converter included in the power conversion device 23. The power conversion device 23 is electrically conductively connected to the first battery 4 and the second battery 24, and is capable of receiving power from the first battery 4, lowering the voltage of the power, and transmitting the power to the second battery 24. Therefore, the second battery 24 is capable of being charged by power received from the first battery 4 via the power conversion device 23.

Heavy current devices that receive power from the first battery 4 at a high voltage tend to increase in temperature due to heat generation. For this reason, the electric work vehicle includes a high-voltage device cooling device 26 for cooling heavy current devices. The high-voltage device cooling device 26 includes a high-voltage device radiator 26A and pumps 26B and 26C. The pumps 26B and 26C are connected in series.

The pumps 26B and 26C pump a refrigerant for cooling heavy current devices that operate based on electric power, such as the inverters 14A and 14B, the electric motors M1 and M2, and the power conversion device 23. When the pumps 26B and 26C are operated, the refrigerant flows through cooling flow paths in the heavy current devices such as the inverters 14A and 14B, the electric motors M1 and M2, and the power conversion device 23, thus cooling the heavy current devices. Then, the refrigerant heated by the heavy current devices is cooled in the high-voltage device radiator 26A through heat dissipation. The order of the cooling flow paths of the heavy current devices may be changed as appropriate.

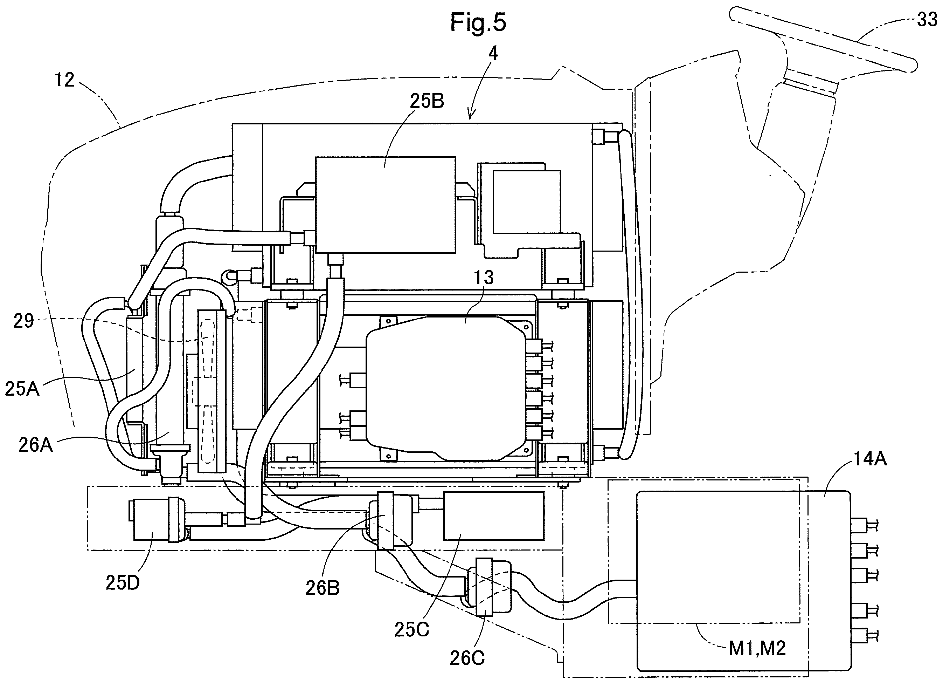

As shown in FIG. 5, the high-voltage device radiator 26A and a battery radiator 25A are disposed forward of the first battery 4 in such a manner as to be arranged one in front of the other. A cooling fan 29 is provided rearward of the high-voltage device radiator 26A and the battery radiator 25A, and forward of the first battery 4. The cooling fan 29 creates cooling air for cooling the refrigerant inside the high-voltage device radiator 26A and the battery radiator 25A. A front grille 12f (see FIG. 1) is provided at the front of the hood 12, and outside air from the front of the battery radiator 25A is introduced as the cooling air. The cooling fan 29 is configured to create cooling air that flows rearward. The cooling air promotes heat dissipation of the battery radiator 25A and the high-voltage device radiator 26A.

### Battery Temperature Regulation

The electric tractor according to the present embodiment includes a temperature regulator H that regulates the temperature of the first battery 4 using power, and the temperature regulator H operates in such a manner that the temperature of the first battery 4 increases if the temperature of the first battery 4 detected by the temperature detection unit 4B is lower than a first set temperature.

If the temperature of the first battery 4 is lower than the first set temperature, the temperature regulator H converts the power supplied from the external power source into power suppliable to a heater (battery heater 25C) as on-board power, and supplies the converted power to the heater (battery heater 25C). If the temperature of the first battery 4 is higher than the first set temperature, the temperature regulator H switches the state of power supply in such a manner as to convert the power supplied from the external power source into power suppliable to the first battery 4 as on-board power, and supply the converted power to the first battery 4.

The temperature regulator H includes a temperature regulation device 25 for managing the temperature of the first battery 4, and the control device 20 (specifically, a temperature regulation control unit that controls the operation of the temperature regulation device).

The temperature regulation device 25 will now be described. As shown in FIG. 5, the temperature regulation device 25 is provided in the vicinity of the first battery 4. As shown in FIG. 3, the temperature regulation device 25 includes the battery radiator 25A, a reservoir tank 25B, the battery heater 25C, a pump 25D, and a circulation flow path through which the refrigerant circulates through the interior of the first battery 4 and the above-described devices. The refrigerant is an insulating oil or the like, for example.

The battery radiator 25A is provided between the reservoir tank 25B and an outlet of a temperature control flow path that is included in the circulation flow path and is located inside the first battery 4. Accordingly, the refrigerant that has been heated in the temperature control flow path located inside the first battery 4 is cooled in the battery radiator 25A through heat dissipation, and returned to the reservoir tank 25B.

The refrigerant is stored in the reservoir tank 25B. The pump 25D pumps the refrigerant in such a manner that the refrigerant circulates in the first battery 4. The battery heater 25C increases the temperature of the first battery 4 by heating the refrigerant. When the pump 25D is operated, the refrigerant circulates from the reservoir tank 25B through the battery heater 25C, the pump 25D, the temperature control flow path located inside the first battery 4, and the battery radiator 25A in this order.

If the temperature of the first battery 4 detected by the temperature detection unit 4B is lower than the first set temperature, the control device 20 is configured to operate the temperature regulation device 25 using the power supplied from the external power source in such a manner that the temperature of the first battery 4 increases. The first set temperature is set to a temperature corresponding to the lower limit value of an allowable temperature range of the first battery 4, for example, -19°C.

If the temperature of the first battery 4 detected by the temperature detection unit 4B is higher than the first set temperature and lower than a second set temperature (for example, 0°C) that is higher than the first set temperature, the control device 20 operates the temperature regulation device 25 using the power supplied from the first battery 4 in such a manner that the temperature of the first battery 4 increases.

After operating the temperature regulation device 25 using the power supplied from the external power source while the temperature of the first battery 4 is lower than the first set temperature, the control device 20 stops the temperature increasing operation of the temperature regulation device 25 in response to the temperature of the first battery 4 increasing to the second set temperature or more.

Specifically, the control device 20 switches the state of power supply in such a manner as to, if the temperature of the first battery 4 is lower than the first set temperature, convert the power (alternating-current power) from the external power source into power suppliable to the battery heater 25C of the temperature regulation device 25, and supply the converted power to battery heater 25C, and, if the temperature of the first battery 4 is higher than the first set temperature, convert the power (alternating-current power) from the external power source into power suppliable to the first battery 4, and supply the converted power to the first battery 4.

The first battery 4 is not charged and discharged if the temperature of the first battery 4 detected by the temperature detection unit 4B is lower than the first set temperature.

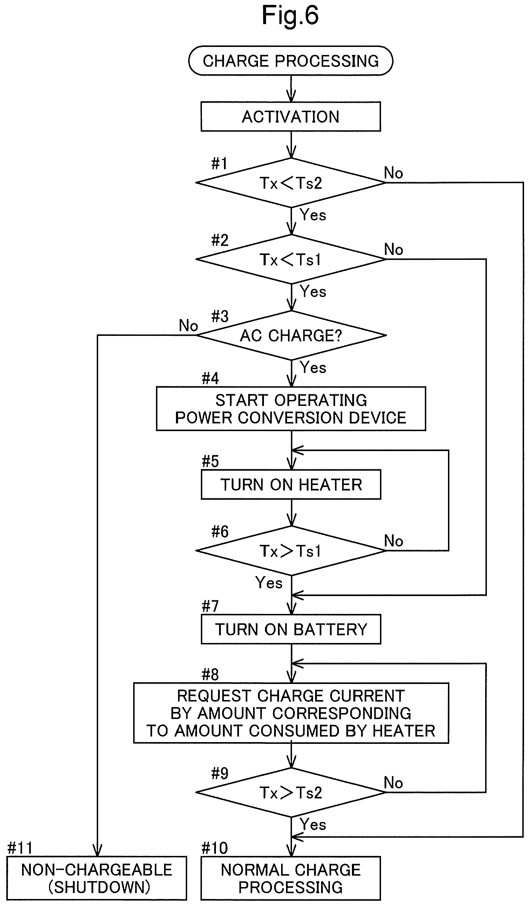

Charge processing performed by the control device 20 will be described in detail below with reference to the flowchart of FIG. 6.

Upon activation of the charge operation, the control device 20 determines whether the temperature of the first battery 4 detected by the temperature detection unit 4B is lower than a second set temperature Ts2 (0°C) (step #1), and also determines whether the temperature of the first battery 4 detected by the temperature detection unit 4B is lower than a first set temperature Ts1 (-19°C) (step #2). At this time, the control device 20 determines whether the lowest temperature among the temperatures of the plurality of unit cells is lower than the first set temperature Ts1 as the temperature of the first battery 4.

If the temperature of the first battery 4 is lower than the first set temperature Ts1 (-19°C), and power (alternating-current power) (AC) from the external power source is available (step #3), the control device 20 operates the power conversion device 23 (OBC) to convert the alternating-current power into direct-current power suitable for the battery heater 25C, and supply that power to the battery heater 25C to operate the battery heater 25C (steps #4 and #5). That is, the state of electric conduction by the power distribution unit 13 is switched to switch the state of power supply. At this time, the power distribution unit 13 and the first battery 4 are disconnected from each other, and the first battery 4 is neither charged nor discharged.

Since it is envisioned that a heating medium has a high viscosity when the temperature of the first battery 4 is lower than the first set temperature Ts1 (-19°C), the pump 25D may be operated while the refrigerant is increased in temperature and reduced in viscosity after operating the battery heater 25C.

In response to the temperature of the first battery 4 becoming higher than the first set temperature Ts1 (-19°C), the first battery 4 is switched to an operative state (steps #6 and #7). That is, the state of electric conduction by the power distribution unit 13 is switched to establish connection to the first battery 4, whereby the first battery 4 becomes chargeable and dischargeable. Then, the power conversion device 23 (OBC) operates to switch the state of power supply to a state of converting the alternating-current power into direct-current power suitable for the first battery 4 and supplying the converted power to the first battery 4.

Thereafter, the control device 20 requests, from the first battery 4, an amount of charge current corresponding to the amount of power consumed by the battery heater 25C, and operates the battery heater 25C using the power from the first battery 4 (step #8). At this time, the pump 25D is also operated. This increases the temperature of the first battery 4.

In response to the temperature of the first battery 4 becoming higher than the second set temperature Ts2 (0°C), the operation of the battery heater 25C is stopped, thus transitioning to normal charge processing (steps #9 and #10). After transitioning to the normal charge processing, in response to the state of charge (SOC) decreasing while the charging condition of the first battery 4 is being checked, the first battery 4 is charged from the external power source, with the external power source connected to the charging socket 36. Upon completion of charging, the charge operation ends.

In step #3, in a case where the external power source (alternating-current power) is not connected to the charging socket 36, no operation can be performed, and therefore charging cannot be performed, whereby the power distribution unit 13 and the first battery 4 are disconnected from each other, and the first battery 4 can be neither charged nor discharged (step #11).

### Alternative Embodiments

The present invention is not limited to the configuration illustrated in the above-described embodiment, and representative alternative embodiments of the present invention will be illustrated below.
(1) In a case where the temperature of the first battery 4 is lower than the first set temperature Ts1 (-19°C), the temperature regulator H may operate using power from the second battery 24, in place of power supplied from the external power source.
(2) In response to the temperature of the first battery 4 becoming higher than the first set temperature Ts1, the temperature regulator H may operate using power supplied from the external power source, in place of power supplied from the first battery 4.
(3) In a case where the temperature of the first battery 4 is lower than the first set temperature Ts1, and the temperature regulator H has performed a temperature increasing operation, the temperature increasing operation may be continued even after the temperature of the first battery 4 has increased to the second set temperature Ts2 or more.
(4) As the temperature regulator H, a configuration including an electric heater that heats the first battery 4 from the outer peripheral side of the accommodation case may be included in place of the configuration including the circulation flow path through which the refrigerant circulates, and the heater that heats the refrigerant.
(5) The temperature regulator H may be configured to operate if the average value of the temperatures of the plurality of unit cells is lower than the first set temperature.
(6) The first battery 4 may be a battery different in type from a lithium ion battery, and the second battery 24 may be a battery different in type from a lead-acid battery.
(7) For the first set temperature Ts1, the temperature "-19°C" is merely an example. The present disclosure is not limited thereto, and a different temperature may be set. Also, for the second set temperature Ts2, the temperature "0°C" is merely an example. The present disclosure is not limited thereto, and a different temperature may be set.
(8) In the above embodiment, the electric tractor is illustrated as an example of the electric work vehicle. However, the electric work vehicle is not limited to an electric tractor, and the present disclosure is applicable to work vehicles that perform various operations, such as a harvester, a rice planter, and construction equipment.
(9) The above embodiment shows a case where the present disclosure is applied to an electric vehicle that drives the travel device by the electric motor M1. However, the present disclosure may be applied to a hybrid vehicle including a travel device that uses both driving force generated by power from a battery and driving force generated by motive power from an engine.

Note that the configurations disclosed in the embodiments described above (including the alternative embodiments; the same applies to the following) are applicable in combination with configurations disclosed in other embodiments so long as no inconsistency arises. The embodiments disclosed herein are illustrative, and embodiments of the present invention are not limited thereto. Appropriate changes and modifications may be made without departing from the scope and spirit of the present invention.

Various types of operation processing in the embodiments described above are implemented by processing circuitry including one or more processors. The processing circuitry may be configured by an integrated circuit or the like in which, in addition to the one or more processors, one or more memories, various analog circuits, and various digital circuits are combined. The one or more memories store a program (instructions) for causing the one or more processors to execute the various types of processing. The one or more processors may execute the various types of processing in accordance with the program read out from the one or more memories, or may execute the various types of processing in accordance with a logic circuit designed in advance to execute the various types of processing. The processors may be various processors adapted to control a computer, including, for example, a central processing unit (CPU), a graphics processing unit (GPU), a digital signal processor (DSP), a field programmable gate array (FPGA), and an application specific integrated circuit (ASIC). Note that the above-described plurality of processors that are physically separated may cooperate each other to execute the various types of processing. For example, the processors respectively mounted in a plurality of physically separated computers may cooperate each other to execute the various types of processing via a network such as a local area network (LAN), a wide area network (WAN), and the Internet. The program may be installed in the memory from an external server device or the like via the network, or may be distributed in a state of being stored in a recording medium such as a compact disc read only memory (CD-ROM), a digital versatile disk read only memory (DVD-ROM), or a semiconductor essential memory to be installed in the memory from the recording medium.

### Industrial Applicability

The present invention is applicable to an electric work vehicle including a battery and an electric motor that transmits motive power to a travel device using power from the battery.

### Description of Reference Signs

- 4: First battery (battery)
- 4B: Temperature detection unit (temperature detector)
- 23: Power conversion device
- 24: Second battery
- 25C: Battery heater (heater)
- H: Temperature regulator
- Ts1: First set temperature
- Ts2: Second set temperature

## Claims

1. An electric work vehicle comprising:
- a battery;
- an electric motor configured to transmit motive power to a travel device using power from the battery;
- a temperature regulator configured to regulate a temperature of the battery, using power; and
- a temperature detector configured to detect a temperature of the battery,
in response to the temperature detected by the temperature detector being lower than a first set temperature, the temperature regulator operating in such a manner that the temperature of the battery increases.

2. The electric work vehicle according to claim 1, wherein the temperature regulator operates using power supplied from an external power source.

3. The electric work vehicle according to claim 1 or 2, wherein, in response to the temperature of the battery detected by the temperature detector being higher than the first set temperature and lower than a second set temperature that is higher than the first set temperature, the temperature regulator operates using power supplied from the battery, in such a manner that the temperature of the battery increases.

4. The electric work vehicle according to claim 3, wherein in response to the temperature of the battery increasing to the second set temperature or more, the temperature regulator stops a temperature increasing operation with respect to the battery.

5. The electric work vehicle according to any one of claims 1 to 4, wherein
- the temperature regulator includes a circulation flow path through which a refrigerant circulates through an interior of the battery, and a heater configured to heat the refrigerant, and
- the heater performs a heating operation using received power.

6. The electric work vehicle according to claim 5, further comprising
a power conversion device configured to convert power supplied from an external power source into on-board power, wherein
the temperature regulator switches a state of power supply in such a manner as to, in response to the temperature of the battery being lower than the first set temperature, convert the power supplied from the external power source into power suppliable to the heater as the on-board power and supply the converted power to the heater, and to, in response to the temperature of the battery being higher than the first set temperature, convert the power supplied from the external power source into power suppliable to the battery as the on-board power and supply the converted power to the battery.

7. The electric work vehicle according to any one of claims 1 to 6, wherein the battery is not charged while the temperature of the battery is lower than the first set temperature.

8. The electric work vehicle according to any one of claims 1 to 7, wherein
- the battery includes a plurality of unit cells,
- the temperature detector is configured to detect a temperature for each of the plurality of unit cells, and
- the temperature regulator operates in response to a lowest temperature among the temperatures of the plurality of unit cells being lower than the first set temperature.

9. The electric work vehicle according to any one of claims 1 to 8, wherein motive power is transmittable to a work apparatus using power from the battery.

10. The electric work vehicle according to any one of claims 1 to 9, further comprising
a second battery different from the battery and configured to supply power to an electric component, wherein
the second battery is configured to supply power to the electric component at a temperature lower than the first set temperature.

11. The electric work vehicle according to claim 10, wherein the battery is a lithium ion battery, and the second battery is a lead-acid battery.
